# EUROPEAN PATENT SPECIFICATION

(11) **EP 2 453 194 B1**
(45) Date of publication and mention of the grant of the patent: **10.01.2018**
(21) Application number: 11189335.0
(22) Date of filing: 16.11.2011
(51) Int. Cl.: F28D 7/02

(54) **Drain provided with a heat exchanger, and shower tray or shower cubicle provided with such a drain**
Abwasserkanal ausgerüstet mit einem Wärmetauscher, und Duschwanne ausgerüstet mit solch einem Abwasserkanal
Drain pourvu d'un échangeur de chaleur, et bac de douche muni d'un tel drain

(30) Priority: 16.11.2010 NL 1038387
(43) Date of publication of application: 16.05.2012
(73) Proprietor: de Wit, Gertjan Jelle, 9301 WC Roden (NL); Dutch Solar System B.V., 7521 PK Enschede (NL)
(72) Inventor: Wit de, Gertjan Jelle, 9301 WC Roden (NL)
(74) Representative: Mink-Lindenburg, Charlotte Hildegard

(56) References cited:
- WO-A1-01/12047
- FR-A- 2 868 796
- NL-C- 1 020 068
- NL-C1- 1 032 458
- US-A- 4 542 546
- US-A1- 2010 270 009

## Description

The invention relates to a drain channel provided with a heat exchanger for recovering and supplying to a cold water conduit heat present in used shower according to the preamble of claim 1. Such drain channels are known from NL1020068. The drawback of the known heat exchanger is that the surface area of the metal tube is relatively small, whereby the exchange of heat between the used washing water and the cold water flowing through the metal tube is limited. The drain channel according to the invention obviates this drawback and has the features of claim 1. Owing to the successive parts or windings positioned one above another the surface area via which the exchange of heat takes place between the used washing water and the cold water flowing through the metal tube is significantly enlarged, wherein used washing water is forced to flow downward via the parts or windings of the tube. According to the invention used washing water is also prevented from flowing away laterally. The used washing water will flow downward at least substantially vertically along the successive parts or windings, whereby a good distribution of the used washing water is achieved and whereby there is a great deal of turbulence, this further increasing the heat transfer.
The Netherlands patent 1020068 of the same inventor describes a heat exchanger for recovering and supplying to a cold water conduit heat present in used shower water, wherein the heat exchanger comprises a metal tube for connection to the cold water conduit, the metal tube taking a spiral-shaped form such that successive windings are positioned at least substantially one above another. The known heat exchanger is intended to be received in a drain in the floor of a shower cubicle. The known heat exchanger is not suitable for accommodation in a drain channel. In addition, the other measures of claim 1 contribute toward a heat transfer in the heat exchanger in the drain channel according to the invention which takes place much more efficiently than in the known heat exchanger. The horizontal orientation of the parts (of the windings) running in longitudinal direction moreover results in a significant space-saving, whereby more windings can be accommodated in the same space compared to the known heat exchanger. Using the same outer dimensions, this can result in an increase in exchanging surface area of 20-25%.

A further favourable embodiment has the feature that the cover is arranged recessed into the drain channel and that the heat exchanger also comprises an additional cover positioned above the cover and provided with a row of additional openings which run centrally in a longitudinal direction and via which used washing water can flow onto the cover, whereby the used washing water will be distributed evenly over the cover. The size of the additional openings is preferably chosen here such that the throughflow of used washing water is determined at least substantially by the openings in the cover. The advantage here is that in a position of use a layer of water of for instance 5 millimetres remains continuously on the cover, whereby identical droplets of used washing water will flow continuously onto the spirally embodied tube.

A further very favourable embodiment, with which a stench trap can be integrated in simple manner into the drain channel, has the feature that the cover is provided with a channel-like recess and that an underside of the additional cover is provided with a closed collar which in a position of use protrudes into the channel-like recess of the cover.

A further favourable embodiment has the feature that the cover and the additional cover are placed removably in the drain channel so that the component parts of the drain channel can be easily cleaned.

A further favourable embodiment, with which the heat transfer from the spirally embodied tube to the cold water flowing past can also be improved, has the feature that a wire deformed mechanically at least in a longitudinal direction is received in the spirally embodied tube. The deformations will create turbulence in the cold water flowing past, this increasing the heat transfer.

A highly favourable alternative embodiment has the feature that the spirally embodied tube is provided with volume-reducing means. The volume-reducing means increase the flow speed and provide for a more turbulent flow, whereby the heat transfer is improved, and they decrease the volume of the heat exchanger, this being important in preventing and combating contamination with the legionella bacteria. The volume-reducing means are preferably formed by an inner tube inserted into the spirally embodied tube and manufactured for instance from a flexible plastic so that it can be inserted into the spirally embodied tube before this latter is curved.
The invention also relates to a shower tray or shower cubicle provided with a drain channel as specified in the foregoing paragraphs.
The invention will now be further elucidated with reference to the following figures, wherein:
- Fig. 1A: shows a schematic top view of a possible embodiment of a shower tray provided with a drain channel according to the invention;
- Fig. 1B: shows a schematic cross-section of this drain channel;
- Fig. 2A: shows a top view of a drain channel according to the invention in more detail;
- Fig. 2B: shows this drain channel without upper cover;
- Fig. 3A: shows a longitudinal section of this drain channel;
- Fig. 3B: shows an example of a mechanically deformed wire;
- Fig. 3C: shows a longitudinal section of the lower cover;
- Fig. 4A: shows a drain channel not being part of the invention;
- Fig. 4B: shows a cross-section of this drain channel.

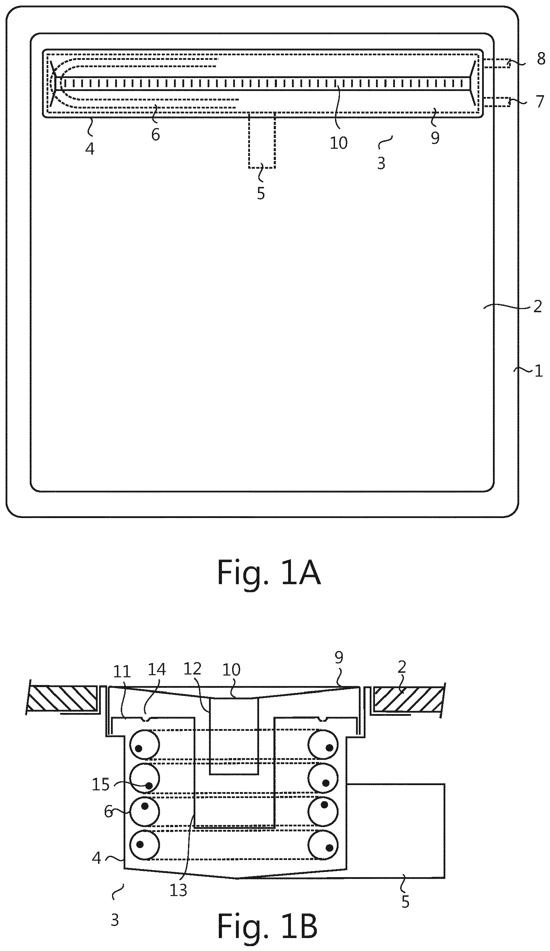

Fig. 1A shows a schematic top view of a possible embodiment of a shower tray 1 provided with a recessed bottom 2 in which a drain channel 3 according to the invention is received. Drain channel 3 comprises a channel part 4 for used washing water provided with an outlet pipe 5 connected to the sewer, and a metal tube 6 provided with a feed 7 for cold mains water and a discharge 8 connected to a mixer tap (not shown) for a shower. Used washing water flows via an upper cover 9 provided with openings 10 along metal tube 6 and heats the mains water before it is carried to the mixer tap.
Fig. 1B shows a schematic cross-section of this embodiment. Shown is channel part 4 with outlet pipe 5 in which is received the spirally curved metal tube 6 through which the mains water for heating flows in a position of use. The upper side of channel part 4 is widened all the way round so that upper cover 9 with openings 10 and a lower cover 11 can be placed recessed therein. The widened edge is further folded outward all the way round so that drain channel 3 can be glued into an opening in bottom 2 of shower tray 1 or can be cast into a floor. At upper cover 9 a collar 12 is arranged around openings 10. Lower cover 11 is provided with a channel-like recess 13 into which collar 12 fits. Lower cover 11 is further provided all the way round with openings 14 positioned precisely above spirally curved tube 6.

When used washing water flows via openings 10 into channel part 4, the channel-like recess 13 is in the first instance filled and then forms together with collar 12 a stench trap. The water then rises until it can flow away via openings 14, wherein it drips in the form of separate droplets onto spirally curved tube 6. The parts of spirally curved tube 6 running in a longitudinal direction preferably run precisely horizontal in a position of use. The used washing water will then pass in droplet form through the successive windings, whereby a very good heat transfer is realized. In order to further enhance the heat transfer, spirally curved tube 6 is provided internally with a mechanically deformed metal wire 15 which increases the turbulence in the passing mains water. As is usual, the heat exchanger is further operated in counterflow, which means in this case that the cold mains water is supplied to the lowest winding. Finally, a double-walled tube known in the field can be employed for tube 6 if this is required by local regulations, so that used washing water can never permeate into the mains water.

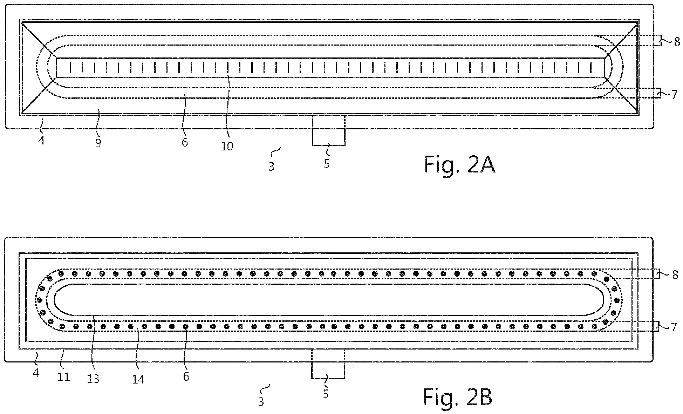

Fig. 2A shows a top view of a drain channel 3 according to the invention in more detail. Shown are channel part 4, upper cover 9 with the slightly recessed openings 10, in addition to outlet pipe 5 and spirally curved tube 6. Openings 10 are preferably selected such that openings 14 in lower cover 11 in fact determine the throughflow, so that in a position of use there is always a layer of water on lower cover 11.

Fig. 2B shows drain channel 3 without upper cover 9, so that lower cover 11 with holes 14 positioned precisely above spirally curved tube 6 can be seen.

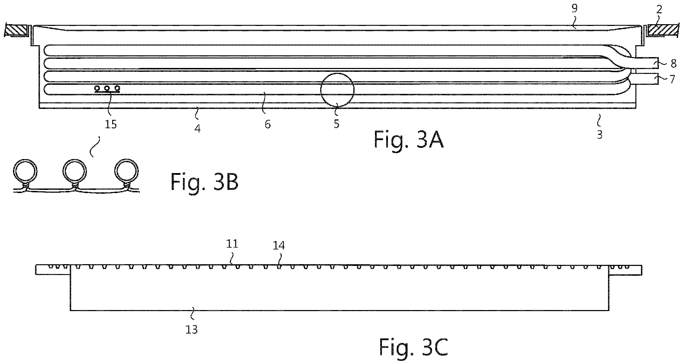

Fig. 3A shows a longitudinal section of drain channel 3, wherein lower cover 11 is omitted for the sake of clarity. Visible are channel part 4 with upper cover 9 and spirally curved tube 6 with feed 7 for cold mains water and discharge 8. In the figure the half bends on the left-hand side are embodied such that the half bends and the parts of spirally curved tube 6 running in a longitudinal direction of channel part 4 run precisely horizontally, while the half bends on the right-hand side mutually connect these horizontal tube segments. Further shown is the mechanically deformed metal wire 15 which is received in spirally curved tube 6 and provided here with loops. Other shapes are of course also possible, as long as they cause turbulence. The mechanically deformed wire can be placed in tube 6 before this latter is curved.
Fig. 3B shows this mechanically deformed metal wire 15 in more detail.
Fig. 3C shows a longitudinal section of lower cover 11, with channel-like recess 13 and holes 14.
Channel part 4, upper cover 9 and lower cover 14 are preferably manufactured from stainless steel, while spirally curved tube 6 is preferably manufactured from copper. The whole can be cleaned periodically in simple manner by taking upper cover 9 and lower cover 14 out of channel part 4 and washing and/or brushing down the spirally shaped tube 6 then left clear.

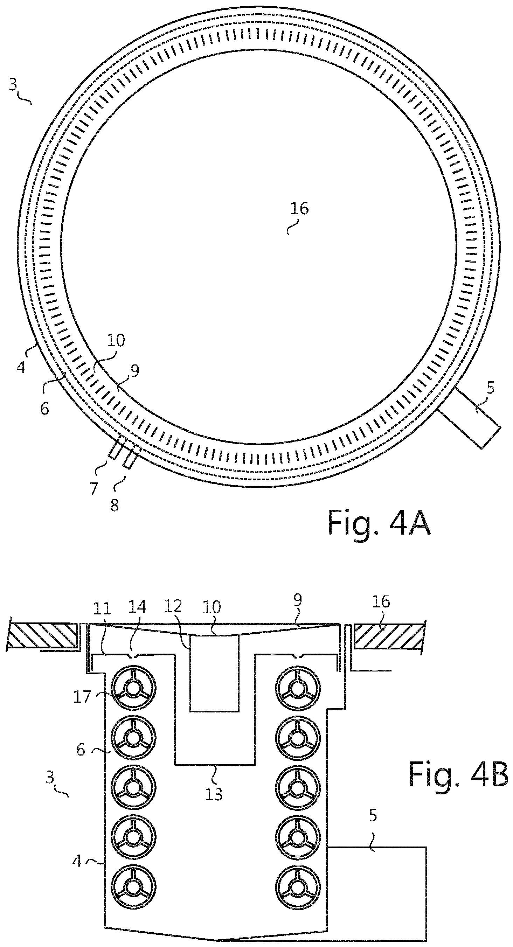

Fig. 4A shows an alternative embodiment of a heat exchanger 3 not belonging to the invention, wherein heat exchanger 3 takes a circular form and can be built into for instance a tile floor 16 of a shared shower area in for instance a sports centre. Channel part 4 for used washing water is provided with an outlet pipe 5 connected to the sewer and spirally curved metal tube 6 is provided with a feed 7 for cold mains water and a discharge 8 connected to the mixer taps (not shown) for a number of showers. Used washing water flows via an upper cover 9 provided with openings 10 along metal tube 6 and heats the mains water before it is carried to the mixer taps.

Fig. 4B shows a schematic cross-section of this drain channel not belonging to the invention. Shown is channel part 4 with outlet pipe 5, in which is received the spirally curved metal tube 6 through which the mains water for heating flows in a position of use. The upper part of the drain channel is widened all the way round so that upper cover 9 with openings 10 and a lower cover 11 can be placed recessed therein. The widened edge is further folded outward all the way round so that heat exchanger 3 can for instance be accommodated in a tile floor 16. At upper cover 9 a collar 12 is arranged around openings 10. Lower cover 11 is provided with a channel-like recess 13 into which collar 12 fits such that collar 12 and channel-like recess 13 together form a stench trap. Lower cover 11 is further provided all the way round with openings 14 positioned precisely above spirally curved tube 6 so that used washing water drips onto spirally shaped tube 6. In the embodiment shown here tube 6 is provided internally with a plastic tube 17, whereby the flow speed of the water is increased, this providing for a more turbulent flow. Tube 17 further reduces the volume of spirally curved tube 6, this being important in combating legionella bacteria.
The invention is of course not limited to the described and shown preferred embodiments. Both preferred embodiments relate for instance to a curved tube. The desired form of the heat exchanger can however also be obtained by connecting one or more tubes or tube parts running as precisely horizontal as possible to U-shaped coupling pieces at the ends thereof so as to form a tube. In the preferred embodiments the tube is formed around an imaginary axis to form a spiral or coil. Alternatively, a number of tubes or tube parts running as precisely horizontal as possible can be positioned in rows lying one above another and be mutually connected to form a tube as described as component of the drain channel as according to claim 1. Use can for instance be made for this purpose of the serpentine-shaped tubes known from NL 1014215 which can be mutually connected in vertical or horizontal position. It is noted that the invention expressly also extends to all possible combinations of the described embodiments.

The invention extends generally to any embodiment falling within the scope of protection as defined in the claims and as seen in the light of the foregoing description and accompanying drawings.

## Claims

1. Drain channel (3) provided with a heat exchanger for recovering and supplying to a cold water conduit heat present in used shower water, wherein the heat exchanger comprises a tube (6), preferably of metal, received in the drain channel for connection to the cold water conduit, and the tube is spirally curved such that successive windings are positioned at least substantially one above another and wherein the heat exchanger also comprises a cover (11) positioned above the tube and provided with openings (14) which are positioned precisely above the tube and via which used washing water can drip onto the tube, **characterized in that**,
the heat exchanger has an elongate form, the tube is formed such that the tube comprises a number of parts with a length at least substantially corresponding to a length of the drain channel, which parts are positioned in rows lying at least substantially one above another, wherein the tube is curved such that half bends on one short side and the parts running in the longitudinal direction of the drain channel run horizontally, wherein half bends on the opposite short side mutually connect the horizontal parts.

2. Drain channel as claimed in claim 1, **characterized in that** the cover (11) is arranged recessed into the drain channel and that the heat exchanger also comprises an additional cover (9) positioned above the cover and provided with a row of additional openings (10) which run centrally in a longitudinal direction and via which used washing water can flow onto the cover (11).

3. Drain channel as claimed in claim 2, **characterized in that** the size of the additional openings (10) is chosen such that the throughflow of used washing water is determined at least substantially by the openings (14) in the cover (11).

4. Drain channel as claimed in claim 2, **characterized in that** the cover (11) is provided with a channel-like recess (13) and that an underside of the additional cover (9) is provided with a closed collar (12) which in a position of use protrudes into the channel-like recess of the cover.

5. Drain channel as claimed in claim 4, **characterized in that** the cover (11) and the additional cover (9) are placed removably in the drain channel.

6. Drain channel as claimed in claim 5, **characterized in that** a wire (15) deformed mechanically at least in a longitudinal direction is received in the tube.

7. Drain channel as claimed in claim 5 or 6, **characterized in that** the tube is provided with volume-reducing means.

8. Drain channel as claimed in claim 7, **characterized in that** the volume-reducing means comprise an inner tube (17) inserted into the spirally embodied tube.

9. Shower tray or shower cubicle provided with a drain channel (3) as claimed in any of the foregoing claims.

## Patentansprüche

1. Mit einem Wärmetauscher versehener Abflusskanal (3) zur Rückgewinnung und Zuführung zu einer Kaltwasserleitung von in gebrauchtem Duschwasser vorhandener Wärme, wobei der Wärmetauscher ein im Abflusskanal aufgenommenes Rohr (6), vorzugsweise aus Metall, zur Verbindung mit der Kaltwasserleitung umfasst, und das Rohr spiralförmig gekrümmt ist, so dass aufeinanderfolgende Wicklungen zumindest im Wesentlichen übereinander angeordnet sind und wobei der Wärmetauscher auch einen über dem Rohr angeordneten Deckel (11) aufweist, der mit Öffnungen (14) versehen ist, die genau über dem Rohr angeordnet sind und über die gebrauchtes Waschwasser auf das Rohr tropfen kann, **dadurch gekennzeichnet, dass** der Wärmetauscher eine längliche Form aufweist, wobei das Rohr so ausgebildet ist, dass das Rohr eine Anzahl von Teilen mit einer Länge aufweist, die zumindest im Wesentlichen einer Länge des Abflusskanals entspricht, wobei diese Teile in Reihen angeordnet sind, die zumindest im Wesentlichen übereinander liegen, und wobei das Rohr so gekrümmt ist, dass Halbbiegungen auf einer kurzen Seite und die in Längsrichtung des Abflusskanals verlaufenden Teile horizontal verlaufen, wobei die Halbbiegungen an der gegenüberliegenden kurzen Seite die horizontalen Teile miteinander verbinden.

2. Abflusskanal nach Anspruch 1, **dadurch gekennzeichnet, dass** der Deckel (11) in den Abflusskanal eingelassen angeordnet ist und dass der Wärmetauscher auch einen über dem Deckel angeordneten zusätzlichen Deckel (9) aufweist, der mit einer Reihe von zusätzlichen, Öffnungen (10) versehen ist, die in einer Längsrichtung mittig verlaufen und über die das gebrauchte Waschwasser auf den Deckel (11) strömen kann.

3. Abflusskanal nach Anspruch 2, **dadurch gekennzeichnet, dass** die Größe der zusätzlichen Öffnungen (10) so gewählt ist, dass der Durchfluss von gebrauchtem Waschwasser zumindest im Wesentlichen durch die Öffnungen (14) im Deckel (11) bestimmt wird.

4. Abflusskanal nach Anspruch 2, **dadurch gekennzeichnet, dass** der Deckel (11) mit einer kanalartigen Ausnehmung (13) versehen ist und dass eine Unterseite des zusätzlichen Deckels (9) mit einem geschlossenen Kragen (12) versehen ist, der in Gebrauchsstellung in die kanalartige Ausnehmung des Deckels hineinragt.

5. Abflusskanal nach Anspruch 4, **dadurch gekennzeichnet, dass** der Deckel (11) und der zusätzliche Deckel (9) lösbar im Abflusskanal angeordnet sind.

6. Abflusskanal nach Anspruch 5, **dadurch gekennzeichnet, dass** in dem Rohr ein zumindest in Längsrichtung mechanisch verformter Draht (15) aufgenommen ist.

7. Ablaufkanal nach Anspruch 5 oder 6, **dadurch gekennzeichnet, dass** das Rohr mit Volumenreduziermitteln versehen ist.

8. Abflusskanal nach Anspruch 7, **dadurch gekennzeichnet, dass** die Volumenreduziermittel ein in das spiralförmig ausgebildete Rohr eingesetztes Innenrohr (17) umfassen.

9. Duschwanne oder Duschkabine, die mit einem Abflusskanal (3) nach einem der vorhergehenden Ansprüche versehen ist.

## Revendications

1. Canal d'évacuation (3) muni d'un échangeur de chaleur pour récupérer et fournir à une conduite d'eau froide une chaleur présente dans les eaux de douche usées, dans lequel l'échangeur de chaleur comprend un tube (6), de préférence en métal, reçu dans le canal d'évacuation pour la connexion au conduit d'eau froide, et le tube est incurvé en spirale de sorte que des enroulements successifs sont positionnés au moins sensiblement les uns au-dessus des autres et dans lequel l'échangeur de chaleur comprend en outre un couvercle (11) positionné au-dessus du tube et muni d'ouvertures (14) qui sont positionnés précisément au-dessus du tube et par le biais desquels les eaux de lavage usées peuvent goutter sur le tube, **caractérisé en ce que** l'échangeur de chaleur a une forme allongée, le tube est formé de sorte que le tube comprend un certain nombre de parties ayant une longueur correspondant au moins sensiblement à une longueur du canal d'évacuation, lesquelles parties sont positionnées en rangées en reposant au moins sensiblement les unes au-dessus des autres, le tube étant incurvé de telle sorte que des demi-tours sur un côté court et les parties s'étendant dans la direction longitudinale du canal d'évacuation s'étendent horizontalement, les demi-tours sur le côté court opposé reliant ensemble les parties horizontales.

2. Canal d'évacuation selon la revendication 1, **caractérisé en ce que** le couvercle (11) est disposé en retrait dans le canal d'évacuation et **en ce que** l'échangeur de chaleur comprend en outre un couvercle supplémentaire (9) positionné au-dessus du couvercle et pourvu d'une rangée d'ouvertures supplémentaires (10) qui s'étendent centralement dans une direction longitudinale et par le biais desquelles les eaux de lavage usées peuvent s'écouler sur le couvercle (11).

3. Canal d'évacuation selon la revendication 2, **caractérisé en ce que** la taille des ouvertures supplémentaires (10) est choisie de telle sorte que le débit des eaux de lavage usées est déterminé au moins sensiblement par les ouvertures (14) réalisées dans le couvercle (11).

4. Canal d'évacuation selon la revendication 2, **caractérisé en ce que** le couvercle (11) est pourvu d'un évidement (13) en forme de canal et **en ce qu'**un côté inférieur du couvercle supplémentaire (9) est pourvu d'un collet fermé (12) qui, dans une position d'utilisation, saillie dans l'évidement en forme de canal du couvercle.

5. Canal d'évacuation selon la revendication 4, **caractérisé en ce que** le couvercle (11) et le couvercle supplémentaire (9) sont placés de manière amovible dans le canal d'évacuation.

6. Canal d'évacuation selon la revendication 5, **caractérisé en ce qu'**un fil (15) déformé mécaniquement au moins dans une direction longitudinale est reçu dans le tube.

7. Canal d'évacuation selon la revendication 5 ou 6, **caractérisé en ce que** le tube est pourvu de moyens de réduction de volume.

8. Canal d'évacuation selon la revendication 7, **caractérisé en ce que** les moyens de réduction de volume comprennent un tube intérieur (17) inséré dans le tube en spirale.

9. Bac de douche ou cabine de douche muni d'un canal d'évacuation (3) selon l'une quelconque des revendications précédentes.
